# EUROPEAN PATENT APPLICATION

(11) **EP 4 691 878 A1**
(43) Date of publication of application: **11.02.2026**
(21) Application number: 24778153.7
(22) Date of filing: 28.03.2024
(51) Int. Cl.: B60W 50/035, B60W 50/029, B60W 30/19

(54) **VEHICLE CONTROL METHOD AND DEVICE, AND VEHICLE**

(30) Priority: 28.03.2023 CN 202310318256
(71) Applicant: Hycet Transmission System (Jiangsu) Co., Ltd., Zhenjiang, Jiangsu 212200 (CN)
(72) Inventor: HUANG, Chao, Zhenjiang, Jiangsu 212200 (CN)
(74) Representative: Murgitroyd & Company
(86) International application number: PCT/CN2024/084463
(87) International publication number: WO 2024/199367

(57) **Abstract**

The embodiments of the present application, which are applicable to the field of vehicle technologies, provide a control method for a vehicle, a device, and a vehicle. The method includes: determining a first gear to be shifted to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle. Using the above method, when the required gear during the gear shift action of the vehicle is unavailable, the drive mode may be switched to a suitable drive mode and a gear of the vehicle may be shifted to an available gear to avoid loss of vehicle power, thereby improving driving safety.

## Description

### CROSS-REFERENCE TO RELATED APPLICATIONS

This application claims priority to Chinese Patent Application No. 202310318256.6, filed on March 28, 2023, titled "VEHICLE AND CONTROL METHOD THEREFOR, AND CONTROL DEVICE'. The disclosure of the aforementioned application is hereby incorporated by reference in its entirety.

### TECHNICAL FIELD

The present application relates to the field of vehicle technologies, and in particular, to a control method for a vehicle, a control device, and a vehicle.

### BACKGROUND

Currently, a vehicle usually has multiple drive modes, such as a series hybrid mode, a parallel mode, an electric four-wheel drive mode, and the like. When the drive mode is switched between these drive modes, a gear that the vehicle typically needs to use and a status of each main working equipment may vary.

In the prior art, while the vehicle is in motion, if a gear shift needs to be performed but a hybrid transmission in the vehicle malfunctions and the gear that needs to be shifted to is unavailable, the vehicle will typically shut down an engine. However, this method will cause a loss of engine power and vehicle stalling, thereby significantly degrading the driver's experience and thus endangering driving safety.

### SUMMARY

In view of this, embodiments of the present application provide a control method for a vehicle, a control device, and a vehicle, to solve a problem of low driving safety when a required gear is unavailable during a gear shift process.

Technical solutions adopted by the present application will be described in the following.

In a first aspect, a control method for a vehicle is provided. The method includes: determining a first gear to be shifted to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

In a second aspect, a vehicle control device is provided. The device includes: a first gear determination module, configured to determine a first gear to be shifted to when a target gear shift action is performed, where the target gear shift action includes one of a gear shift action when a drive mode of the vehicle remains unchanged and a gear shift action when the drive mode is switched; a state information determination module, configured to acquire state information of the vehicle when the first gear is in a fault state; a target vehicle control strategy determination module, configured to determine, based on the state information and a preset execution condition corresponding to the target gear shift action, a target vehicle control strategy; and a vehicle control module, configured to control, based on the target vehicle control strategy, the vehicle.

In a third aspect, an embodiment of the present application provides a vehicle, including a memory, a processor, and a computer program stored in the memory and executable on the processor, where the computer program is executed by the processor to implement the following steps: determining a first gear to be shifted to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

In a fourth aspect, an embodiment of the present application provides a computer-readable storage medium, where a computer program is stored in the computer-readable storage medium and is executed by a processor to implement the following steps: determining a first gear to be shifted to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

In a fifth aspect, an embodiment of the present application provides a computer program product, when the computer program product runs on a vehicle, the vehicle implements the following steps: determining a first gear to be shifted to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

Compared with the prior art, the embodiments of the present application include the following advantages: by applying the method provided by the embodiments of the present application, when the vehicle needs to perform a gear shift action without changing a drive mode or a gear shift action during a switch of the drive mode, a first gear to be shifted to when the vehicle performs the above gear shift action may be determined. Then, when it is determined that the first gear is in a fault state, state information of the vehicle may be obtained. Furthermore, based on the state information and a preset execution condition corresponding to the target gear shift action performed by the vehicle, a target vehicle control strategy may be reasonably determined to control the vehicle based on the target vehicle control strategy. Thus, when the first gear required during the gear shift action of the vehicle is unavailable, an onboard equipment can switch the drive mode to a suitable drive mode and shift a gear of the vehicle to an available gear to avoid loss of vehicle power, thereby improving driving safety.

### BRIEF DESCRIPTION OF THE DRAWINGS

In order to more clearly illustrate the technical solutions in the embodiments of the present application, accompanying drawings needed in the embodiments or exemplary technical descriptions will be briefly introduced in the following. Obviously, the accompanying drawings in the following description are only some embodiments of the present application. For those skilled in the art, other drawings may be obtained from these accompanying drawings without creative effort.
FIG. 1 is a simplified schematic structural diagram of a vehicle drive mode provided by an embodiment of the present application.
FIG. 2 is a flowchart of an implementation of a control method for a vehicle provided by an embodiment of the present application.
FIG. 3 is a schematic structural diagram of a vehicle control device provided by an embodiment of the present application.
FIG. 4 is a schematic structural diagram of a vehicle provided by an embodiment of the present application.

### BRIEF DESCRIPTION OF THE EMBODIMENTS

In order to make objectives, technical solutions, and advantages of the present application clearer, the present application will be further described in detail with reference to the accompanying drawings and embodiments in the following. In the following description, for the purpose of illustration rather than limitation, specific details such as specific system structures and technologies are proposed to provide a thorough understanding of the embodiments of the present application. However, it should be clear to those skilled in the art that the present application can also be implemented in other embodiments without these specific details. In other cases, detailed descriptions of well-known systems, devices, circuits, and methods are omitted to avoid unnecessary details hindering the description of the present application.

Currently, a vehicle usually has multiple drive modes, such as a series hybrid mode, a parallel mode, an electric four-wheel drive mode, and the like. When the drive mode is switched between these multiple drive modes, a gear that the vehicle typically needs to use and a status of each main working equipment may vary.

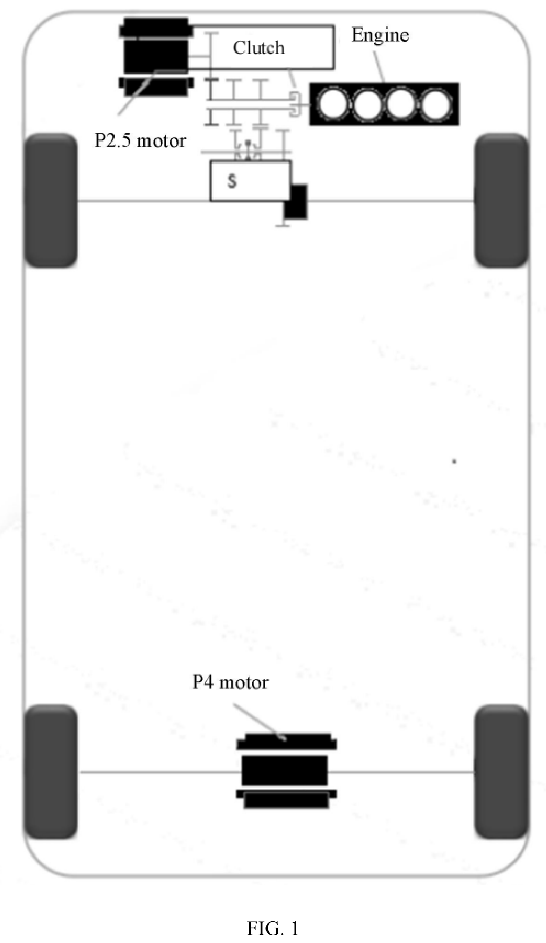

Specifically, referring to FIG. 1, FIG. 1 is a simplified schematic structural diagram of a vehicle drive mode provided by an embodiment of the present application. In FIG. 1, a drive mode of a vehicle is mainly composed of power equipment such as an engine, a P2.5 motor, a P4 motor, and an Automated Mechanical Transmission (AMT) (not shown in the figures). Therein, the P2.5 motor is connected to an input shaft gear of a transmission, and the P2.5 motor is connected to the engine through a clutch.

At this time, for different drive modes, a gear required by the vehicle and a status of a main working equipment can be classified as the following:
1. a pure electric four-wheel drive mode, where the state of the main working equipment and the gear may include: the engine being in a shutdown state; the clutch being open; the gear being in a 1st or a 2nd gear; the ④ P2.5 motor being used to drive; and the ⑤ P4 motor being used to drive;
2. an engine direct drive mode, where the state of the main working equipment and the gear may include: the engine being in a start state; the clutch being closed; the gear being in the 1st or the 2nd gear; the ④ P2.5 motor being used to drive or generate electricity; and the ⑤ P4 motor being used to drive;
3. a series hybrid mode, where the state of the main working equipment and the gear may include: ① the engine being in the start state; ② the clutch being closed; ③ the gear being in a neutral gear; ④ the P2.5 motor being used to generate electricity; ⑤ and the P4 motor being used to drive; and
4. an idle electric four-wheel drive mode, where the state of the main working equipment and the gear may include: ① the engine being in the start state; ② the clutch being open; ③ the gear being in the 1st or the 2nd gear; ④ the P2.5 motor being used to drive; ⑤ and the P4 motor being used to drive.

Therein, the engine direct drive mode and the series hybrid mode mentioned above are both hybrid power drive modes, that is, both the engine and the motor are used to drive. The pure electric four-wheel drive mode and the idle electric four-wheel drive mode mentioned above are both pure electric drive modes, that is, only the motor is used to drive the vehicle.

Currently, while the vehicle is in motion, if a gear shift needs to be performed but a hybrid transmission in the vehicle malfunctions and the gear that needs to be shifted to is unavailable, the vehicle will typically shift a gear of the vehicle to another gear, or shut down an engine. However, the shift from the current gear to the other power gear may easily cause the vehicle to overspeed. Furthermore, a loss of engine power may be caused by shutdown of the engine, which may leads to vehicle stalling, thereby significantly degrading the driver's experience and thus endangering driving safety.

Based on this, in order to improve driving safety, the embodiments of the present application provide a control method for a vehicle, which may be applied to a vehicle onboard equipment. For example, the onboard equipment may be a Vehicle Control Unit (VCU) or a Hybrid Controller Unit (HCU), which is not limited herein.

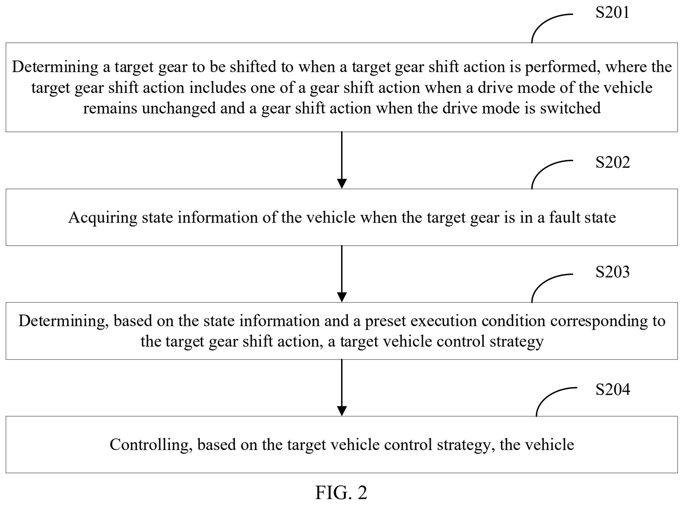

Referring to FIG. 2, FIG. 2 shows a flowchart of implementation of a control method for a vehicle provided by an embodiment of the present application. The method includes the following steps.

S201: determining a first gear to be shifted to when a target gear shift action is performed, where the target gear shift action includes one of a gear shift action when a drive mode of the vehicle remains unchanged and a gear shift action when the drive mode is switched.

In one embodiment, the gear shift action when the drive mode of the vehicle remains unchanged may be considered as: when the vehicle is driving in a current drive mode, only the gear is adjusted. The gear shift action when the drive mode is switched may be considered as: when the vehicle is driving in the current drive mode, the current drive mode needs to be adjusted while the gear of the vehicle also changes.

Therein, the gear of the vehicle includes all power gears and a neutral gear (N gear). Therein, different vehicles usually contain different power gears. In this embodiment, for example, the power gears include a 1st gear and a 2nd gear.

Therein, in an intelligent drive mode, an onboard equipment may be configured to determine, based on an intelligent driving controller in an intelligent driving system, the first gear to be shifted to when the target gear shift action is performed by the vehicle. Alternatively, the first gear to be shifted to may also be determined based on a driver's operation, which is not limited here.

S202: acquiring state information of the vehicle when the first gear is in a fault state.

In one embodiment, the vehicle is usually equipped with a Transmission Control Unit (TCU), which can receive a gear shift command sent by the onboard equipment to adjust the gear, and then determine whether the first gear is in a fault state. For example, when the TCU receives a gear shift command while driving in the 1st gear or the 2nd gear, it can perform a gear disengagement action. At this time, if the gear disengagement fails, a command that the neutral gear is in a fault state may be uploaded to the onboard equipment.

Alternatively, after the TCU receives a command to engage the 1st gear or the 2nd gear, it will perform a gear engagement action. If the gear engagement fails, a command that the 1st gear or the 2nd gear is in a fault state may be uploaded to the onboard equipment.

In one embodiment, the vehicle state information includes, but is not limited to, one or more types of information such as a vehicle speed, a specific drive mode in which the target gear shift action occurs, specific drive modes to be switched between during which the target gear shift action occurs, or the gear of the vehicle.

Based on this, in this embodiment, for different target gear shift actions, the required state information of the vehicle is usually different. That is, the onboard equipment can also determine the required state information based on a current target gear shift action, thereby eliminating the need to perform the step of acquiring all state information of the vehicle, reducing the time required for the vehicle to execute steps S202-S204, and improving vehicle control efficiency.

S203: determining, based on the state information and a preset execution condition corresponding to the target gear shift action, a target vehicle control strategy.

In one embodiment, the preset execution condition may be set according to actual conditions. It should be noted that for different target gear shift actions, their corresponding preset execution conditions are usually different. Based on this, combined with the explanation of S202 above, the preset execution condition needs to correspond to the state information to judge the state information, and then the onboard equipment may determine an appropriate target vehicle control strategy based on a judgement result.

Specifically, the following content explains the required state information corresponding to different target gear shift actions and multiple scenarios for the step of determining, based on the state information and the preset execution condition corresponding to the target gear shift action, the target vehicle control strategy.

In a first scenario:
when the drive mode includes an engine direct drive mode and a series hybrid mode, the target gear shift action includes a gear shift action of the vehicle in the engine direct drive mode and a gear shift action when the drive mode of the vehicle is switched from the engine direct drive mode to the series hybrid mode. At this time, the onboard equipment may acquire a second gear currently used by the vehicle and a target vehicle speed, and then determine a brake pressure of a brake master cylinder when the vehicle is driving at the target vehicle speed, and determine a target calibration speed based on the second gear and the brake pressure. Finally, the target vehicle speed and the target calibration speed are determined as the state information.

Therein, the second gear is the gear currently used. Taking the 1st gear and the 2nd gear as examples of the power gears, at this time, the gear shift action in the engine direct drive mode include: shifting from the 1st gear or the 2nd gear to a neutral gear; or shifting from the neutral gear to the 1st gear or the 2nd gear; or shifting from the 1st gear to the 2nd gear; or shifting from the 2nd gear to the 1st gear. Therein, since the gear needs to be shifted to the neutral gear when the drive mode of the vehicle is switched from the engine direct drive mode to the series hybrid mode, only a situation where the neutral gear is the target gear needs to be considered when the drive mode of the vehicle is switched from the engine direct drive mode to the series hybrid mode. Therefore, the target gear shift action when the drive mode of the vehicle is switched from the engine direct drive mode to the series hybrid mode only includes a gear shift action from the 1st gear or the 2nd gear to the neutral gear.

At this time, the target gear shift action is any one of the gear shift actions mentioned above.

In one embodiment, the target vehicle speed is a current driving speed of the vehicle. The driving speed of the vehicle is usually displayed on an instrument panel, so it can be considered that the vehicle is equipped with a device to collect the driving speed of the vehicle. For example, the vehicle may be equipped with a speed sensor to collect the target vehicle speed.

In one embodiment, the aforementioned brake master cylinder, also known as a hydraulic brake master pump, serves as a power source for a braking system of the vehicle. It is used to convert a mechanical force applied by a driver on a brake pedal and a force from a vacuum booster into a brake oil pressure. The brake fluid, under pressure, is then sent through brake lines to a brake wheel cylinder at each wheel, where a wheel brake converts it into wheel braking force to brake the vehicle. Therein, the brake pressure may be considered as the aforementioned brake oil pressure.

In this embodiment, a relationship between a calibrated speed, the second gear, and the brake pressure may be pre-stored in the onboard equipment to determine the target calibrated speed from multiple calibrated speeds. For example, a coordinate system may be constructed with a horizontal axis representing the brake pressure and a vertical axis representing the second gear. Subsequently, for coordinate points representing different brake pressures and different second gear,, corresponding calibrated speeds may be set, thereby forming the aforementioned relationship.

In one embodiment, after the aforementioned state information is acquired, the onboard equipment may determine a strategy of maintaining the second gear and the engine direct drive mode as the target vehicle control strategy when the vehicle speed is greater than the target calibration speed. Therein, the target shift actions in the first scenario have been explained above and will not be repeated.

Specifically, when the target vehicle control strategy is determined to be maintaining the second gear and the engine direct drive mode, the onboard equipment may send an instruction of using the second gear currently used by the vehicle to the TCU which is configured to control the gear, and may send an instruction of maintaining the engine direct drive mode to the controller which is configured to adjust the drive mode.

It should be understood that when the target vehicle control strategy determined for the aforementioned scenario is to maintain the second gear currently used by the vehicle and the engine direct drive mode, the onboard equipment may not need to shut down the engine. And the vehicle may be prevented from overspeeding by the onboard equipment when the vehicle gear is switched to other power gears to control the vehicle to drive, thereby ensuring driving safety.

In another embodiment, when the vehicle speed is less than or equal to the target calibration speed, the onboard equipment may determine a strategy of maintaining the second gear and controlling an engine to stop working as the target vehicle control strategy. At this time, the onboard equipment may send an instruction of using the second gear currently used by the vehicle to the TCU which is configured to control the gear, and may send an instruction of controlling the engine to stop working to an engine controller.

It should be noted that when the vehicle speed is less than or equal to the target calibrated speed, if the engine is still kept running, the vehicle may experience engine idling due to a low speed. At this time, if the engine idling speed is too high, it is easy for the engine to stall from being dragged by the wheels, causing the vehicle to shake. Based on this, to ensure the vehicle can drive normally, the onboard equipment needs to control the engine to stop when the vehicle speed is less than or equal to the target calibrated speed.

It should be added that when controlling the engine to stop, since both the engine direct drive mode and the idle electric four-wheel drive mode require the engine to be started, the onboard equipment may also switch the drive mode of the vehicle from the engine direct drive mode to the pure electric four-wheel drive mode to control the vehicle to continue driving.

Therein, based on the aforementioned status of the main working equipment and the gear in the series hybrid mode and the engine direct drive mode, it is known that a difference between the series hybrid mode and the engine direct drive mode lies in that the gear in the series hybrid mode is the neutral gear, while the gear in the engine direct drive mode is in the 1st gear or the 2nd gear. Therefore, during a switching process from the series hybrid mode to the engine direct drive mode, there is also a scenario where the gear is shifted from the neutral gear to the 1st gear or the 2nd gear. At this time, the determination method of the target vehicle control strategy may be referred to the determination method in the first scenario mentioned above.

It should be noted that the aforementioned first scenario is a scenario where the first gear to be shifted to is in a fault state during a gear shift process under a hybrid drive mode (including motor drive and engine drive). In other scenarios, the vehicle may also use the pure electric drive mode, where the first gear to be shifted to is in a fault state during the gear shift process. For example, when the drive mode of the vehicle is switched from the pure electric four-wheel drive mode to the electric rear-wheel drive mode, or maintains the pure electric four-wheel drive mode unchanged, or is switched from the idle electric four-wheel drive mode to the series hybrid mode, there is a scenario where the first gear to be shifted to is in the fault state. At this time, the target vehicle control strategy may be determined as follows.

In a second scenario:
when the drive mode includes the series hybrid mode, the pure electric four-wheel drive mode of a pure electric drive mode, the idle electric four-wheel drive mode of a pure electric drive mode, and the electric rear-wheel drive mode in the pure electric drive mode, if the target shift action is only a shift action of the vehicle in the pure electric drive mode, the onboard equipment may determine a strategy of maintaining the second gear currently used by the vehicle and prohibit activation of the series hybrid mode as the target vehicle control strategy.

Therein, the shift actions of the vehicle in the pure electric drive mode may include: a shift action of the vehicle in the pure electric four-wheel drive mode, or a shift action when the drive mode of the vehicle is switched from the pure electric four-wheel drive mode to the electric rear-wheel drive mode, or a shift action when the drive mode of the vehicle when the drive mode of the vehicle is switched from the idle electric four-wheel drive mode to the series hybrid mode.

Therein, the electric four-wheel drive mode includes the pure electric four-wheel drive mode and the idle electric four-wheel drive mode mentioned above, which will not be explained in detail here. Therein, the electric rear-wheel drive mode is a mode in which the motor only applies driving force to the rear wheels of the vehicle to control the vehicle to drive. The electric four-wheel drive mode is a mode in which the motor applies driving force to all wheels of the vehicle to control the vehicle to drive.

It should be noted that in the shift action when the drive mode of the vehicle is switched from the electric four-wheel drive mode to the series hybrid mode, the vehicle is currently in the pure electric drive mode. Therefore, when the target shift action is the shift action in the electric four-wheel drive mode, or the shift action when the drive mode of the vehicle is switched from the electric four-wheel drive mode to the electric rear-wheel drive mode, or the shift action when the drive mode of the vehicle is switched from the electric four-wheel drive mode to the series hybrid mode, the target shift action may be regarded as the shift action of the vehicle in the pure electric drive mode. That is, the second scenario is a scenario where the target shift action is performed in the pure electric drive mode and the first gear (that is, the neutral gear) is in a fault state.

It should be added that since only a rear axle is used to drive the vehicle in the electric rear-wheel drive mode, a front axle gear of the vehicle is in the neutral gear at this time. However, in the pure electric four-wheel drive mode, the front axle gear of the vehicle needs to be in the 2nd gear or other gears. Therefore, when the drive mode of the vehicle is switched from from the electric rear-wheel drive mode to the pure electric four-wheel drive mode, there is no scenario where the aforementioned neutral gear is in the fault state.

It can be understood that in the prior art, when the drive mode of the vehicle is switched from the pure electric four-wheel drive mode to the electric rear-wheel drive mode, or from the idle electric four-wheel drive mode to the series hybrid mode, if the neutral gear is in the fault state, the onboard equipment usually controls the vehicle to stay in the current fault state, and cannot determine a state and a gear which the vehicle needs to adjust to in order to control the vehicle to drive, that is, driving safety may not be ensured.

Based on this, in this embodiment, in order to improve driving safety, when the vehicle is in the second scenario, the onboard equipment may determine a strategy of maintaining the second gear currently used by the vehicle and prohibiting activation of the series hybrid mode as the target vehicle control strategy. Therein, the premise of running the series hybrid mode is that the neutral gear of the vehicle is in a normal state. Therefore, when the neutral gear is in a fault state, the onboard equipment needs to prohibit the activation of the series hybrid mode to avoid a situation where the vehicle cannot use other gears in time due to prolonged activation of the series hybrid mode while the vehicle cannot normally run in the series hybrid mode.

It should be added that in order to ensure a normal operation of the vehicle, when the onboard equipment determines the strategy of maintaining the second gear currently used by the vehicle and prohibiting the activation of the series hybrid mode as the target vehicle control strategy, the onboard equipment may also determine a strategy of maintaining the drive mode currently used as the target vehicle control strategy.

It should be noted that in the second scenario, the state information may only be the target shift action. However, the target shift action may be acquired by the onboard equipment at the aforementioned step S201. Therefore, when the target shift action is determined to be the shift action in the pure electric drive mode and the first gear (that is, the neutral gear) is determined to be in the fault state, the onboard equipment may directly determine the target vehicle control strategy without additional acquisition of the state information of the vehicle.

For example, when the vehicle is driving in the pure electric four-wheel drive mode and the gear is in the 1st gear, if it is necessary to maintain the pure electric four-wheel drive mode unchanged or switch the drive mode from the pure electric four-wheel drive mode to the electric rear-wheel drive mode, the vehicle's gear must be switched to the neutral gear. At this time, when the neutral gear to be shifted to is in the fault state, in order to ensure driving safety, the onboard equipment may maintain the second gear (that is, the 1st gear) currently used. Meanwhile, as the gear of the vehicle needs to be shifted to the neutral gear when the series hybrid mode is used, the activation of the series hybrid mode may also be prohibited.

Based on the above description, it can be seen that the second scenario described above is a scenario where the vehicle is in the pure electric drive mode, and the first gear (that is, the neutral gear) to be shifted to is in the fault state during the gear shift process of the vehicle. However, during the gear shift process of the vehicle in the pure electric drive mode, there may also be scenarios where the first gear (that is, the 1st gear or the 2nd gear) to be shifted to is in a fault state. For example, during the gear shift action (that is, from the 1st gear to the 2nd gear, or from the 2nd gear to the 1st gear) in the pure electric four-wheel drive mode, or during the gear shift action when the drive mode of the vehicle is switched from the electric rear-wheel drive mode to the pure electric four-wheel drive mode, the first gear (that is, the 1st gear or the 2nd gear) to be shifted to may be in the fault state. At this time, the target vehicle control strategy may be determined as follows.

In a third scenario:
when the drive mode includes the pure electric four-wheel drive mode and the electric rear-wheel drive mode in the pure electric drive mode, and the power gear is in a fault state, if the target shift action is a shift action of the vehicle in the pure electric drive mode, a strategy of maintaining the second gear currently used by the vehicle is determined as the target vehicle control strategy.

Therein, the shift action in the pure electric drive mode may include a shift action of the vehicle in the pure electric four-wheel drive mode, or a shift action when the drive mode of the vehicle is switched from the electric rear-wheel drive mode to the pure electric four-wheel drive mode, which is not limited here.

It should be added that in the third scenario, the onboard equipment can maintain the second gear currently used by the vehicle while maintaining the drive mode currently used by the vehicle to control the vehicle to drive. For example, the onboard equipment may maintain the electric rear-wheel drive mode or the electric four-wheel drive mode unchanged.

Similar to the second scenario, the state information may also be the target shift action only. That is, when the target shift action is determined to be the shift action in the pure electric drive mode, and the first gear (that is, the 1st gear or the 2nd gear) is in the fault state, the onboard equipment may directly determine the target vehicle control strategy without additional acquisition of the state information of the vehicle.

It should be noted that based on the above description, the third scenario described above is a scenario where the vehicle uses the pure electric four-wheel drive mode of the pure electric drive mode or the electric rear-wheel drive mode of the pure electric drive mode, and the first gear (that is, the 1st gear or the 2nd gear) to be shifted to is in the fault state during the gear shift process of the vehicle. Therein, when the drive mode of the vehicle is switched from the pure electric four-wheel drive mode to the electric rear-wheel drive mode, the onboard equipment only needs to disengage the front axle gear (that is, shifting to the neutral gear). Therefore, in the scenario where the drive mode of the vehicle is switched from the pure electric four-wheel drive mode to the electric rear-wheel drive mode, the third scenario (that is, the 1st gear or the 2nd gear being in the fault state) does not exist. Therefore, the third scenario combined with the second scenario described above constitutes all scenarios where the first gear (that is, the 1st gear, the 2nd gear or the neutral gear) to be shifted to is in the fault state when the vehicle drives in the pure electric drive mode.

In the second scenario described above, it has been explained that when the drive mode of the vehicle is switched from the pure electric drive mode to the series hybrid mode, the neutral gear is unavailable. However, in practical applications, there may also be a scenario where the drive mode of the vehicle is switched from the series hybrid mode to the pure electric drive mode. At this time, the target shift action will be a shift action from the neutral gear currently used to the 1st gear or the 2nd gear when the drive mode of the vehicle is switched from the series hybrid mode to the idle electric four-wheel drive mode. Detailed description of this scenario will be described as follows.

In a fourth scenario:
when the drive mode includes the series hybrid mode and the idle electric four-wheel drive mode of the pure electric drive mode, and the power gear is in the fault state, if the target shift action is a shift action when the drive mode of the vehicle is switched from the series hybrid mode to the idle electric four-wheel drive mode, a strategy of maintaining the second gear currently used by the vehicle and maintaining the series hybrid mode of the vehicle may be determined as the target vehicle control strategy.

It should be noted that during a switching process from the series hybrid mode to the idle electric four-wheel drive mode, the vehicle is typically in a starting state or needs to drive at a low speed. At this time, during the switching process, since the vehicle needs to drive at the low speed, it is necessary to switch the gear of the vehicle from the neutral gear to the 1st gear. Based on this, for the fourth scenario mentioned above, the 1st gear may be taken as an example of the power gear.

In another embodiment, when the drive mode of the vehicle is switched from the series hybrid mode to the pure electric four-wheel drive mode, there may be cases where the gear of the vehicle needs to be shifted from the neutral gear to the 1st gear or the 2nd gear. At this time, during the switching process, the method corresponding to the fourth scenario may also be used to determine the target vehicle control strategy.

It can be understood that a premise for the vehicle to use the series hybrid mode is that the vehicle is in the neutral gear. Therefore, in this scenario, the second gear mentioned above is the neutral gear.

Similar to the second scenario, the state information may also be the target shift action only. That is, when the target gear shift action is determined to be a gear shift action when the drive mode of the vehicle is switched from the series hybrid mode to the pure electric four-wheel drive mode, and the first gear (that is, the 1st gear or the 2nd gear) is in the fault state, the onboard equipment may directly determine the target vehicle control strategy without additional acquisition of the state information of the vehicle.

It should be noted that the first, the second, the third, and the fourth scenarios mentioned above are all scenarios where the vehicle has only one first gear to be shifted to in a fault state during the gear shift process. However, in practical application scenarios, there may also be cases where the first gear to be shifted to is in a fault state, and all other power gears of the vehicle are in the fault state. At this time, the vehicle may control the vehicle through the following strategy. Detailed description will be described as follows.

In a fifth scenario:
when the first gear to be shifted to is any power gear in the vehicle, the onboard equipment may obtain a first working state of a clutch inside the vehicle, as well as second working states of other power gears. After that, the onboard equipment may determine the first working state and the second working states as the state information. Finally, when the first working state is in the fault state and all of the other second working states are in the fault states, the onboard equipment may determine the strategy of prohibiting an engine of the vehicle from starting, prohibiting activation of the pure electric four-wheel drive mode, and adjusting the gear of the vehicle to the neutral gear as the target vehicle control strategy. Furthermore, when the first working state is in the normal state and all of the other second working states are in the fault states, the onboard equipment may determine a strategy of prohibiting the engine direct drive mode, prohibiting the activation of the pure electric four-wheel drive mode, and adjusting the gear of the vehicle to the neutral gear as the target vehicle control strategy.

In one embodiment, the clutch mentioned above is used to connect and disconnect the engine from a wheel transmission device. Therefore, when the clutch is unavailable, torque output by the engine cannot be transmitted to the wheels.

It should be noted that in this embodiment, the other power gears should include the second gear currently used by the vehicle. At this time, when all power gears and the clutch are in the fault state, in order to avoid ineffective engine operation or damage to the engine and other hardware, the onboard equipment can prohibit the engine from starting, so as to keep the engine in a shutdown state.

It should be added that the fifth scenario mentioned above is applicable to any drive mode where all of the second working states of the other power gears are in the fault state.

However, when the engine is in the shutdown state, although a premise for the pure electric four-wheel drive mode may be satisfied, the vehicle needs to be in the 1st gear or the 2nd gear when the electric four-wheel drive mode is used. Therefore, when all of the other power gears are in the fault states, even if the pure electric four-wheel drive mode is activated, it cannot normally drive the vehicle. Based on this, for driving safety, the onboard equipment may further prohibit the activation of the pure electric four-wheel drive mode, adjust the gear of the vehicle to the neutral gear, and control the vehicle to drive in the electric rear-wheel drive mode, thereby reducing the vehicle speed and improving driving safety.

Therein, when the first working state is in the normal state (that is, the clutch is available), the clutch may transmit the torque output by the engine to the wheels, allowing the vehicle to continue driving. However, when all of the other power gears are in the fault states, even if the clutch is available, the clutch cannot transmit power to the wheels. Therefore, to avoid prolonged activation of the engine direct drive mode and the pure electric four-wheel drive mode when all of the other power gears are in the fault states, the onboard equipment may prohibit the activation of the engine direct drive mode and the pure electric four-wheel drive mode, and shift the gear of the vehicle to the neutral gear, to reduce the vehicle speed and improve driving safety.

It should be added that when the clutch is available, all of the other power gears are in the fault states, and the neutral gear is in the normal state, the drive mode of the vehicle may be switched to the series hybrid mode, to select a reasonable drive mode and gear to control the vehicle to drive.

In view of above, the above explanation describes various scenarios for determining the target vehicle control strategy when the first gear is in the fault state while performing a shift action under multiple drive modes.

It can be understood that if the first gear to be shifted to during the execution of the target shift action is in a normal state, the vehicle can normally execute the target shift action, and then control the vehicle to drive normally according to a vehicle control strategy corresponding to the target shift action.

S204: controlling, based on the target vehicle control strategy, the vehicle.

Based on the explanation of S203 above, after the target vehicle control strategy is determined, the onboard equipment may control the vehicle to drive safely according to a drive mode and gear selection method in the target vehicle control strategy.

In this embodiment, when the vehicle needs to perform a gear shift action with the drive mode unchanged or a gear shift action with the drive mode switched, the first gear to be shifted to during the execution of the gear shift action may be determined. Then, when it is determined that the first gear is in a fault state, the state information of the vehicle may be acquired. Furthermore, based on the state information and the preset execution condition corresponding to the target gear shift action performed by the vehicle, a target vehicle control strategy may be reasonably determined to control the vehicle based on the target vehicle control strategy. Thus, when the first gear required during the gear shift action of the vehicle is unavailable, the onboard equipment of the vehicle may switch the drive mode to a suitable drive mode and shift the gear of the vehicle to an available gear to avoid loss of vehicle power and improve driving safety.

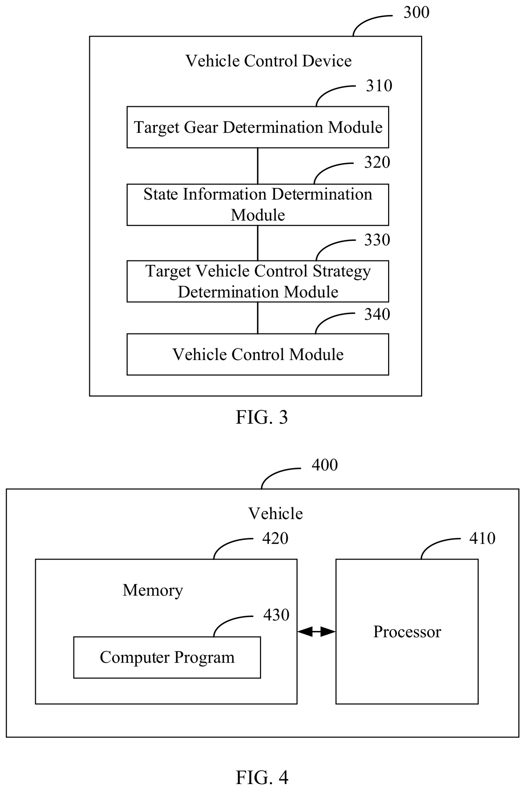

Referring to FIG. 3, FIG. 3 is a schematic structural diagram of a vehicle control device provided by an embodiment of the present application. In this embodiment, each module included in the vehicle control device is used to execute each step in the embodiment corresponding to FIG. 2. For details, it can be referred to FIG. 2 and the related description in the embodiment corresponding to FIG. 2. For ease of explanation, only parts related to this embodiment are shown. Referring to FIG. 3, the vehicle control device 300 may include: a first gear determination module 310, a state information determination module 320, a target vehicle control strategy determination module 330, and a vehicle control module 340.

The first gear determination module 310 is configured to determine a first gear to be switched to when a target gear shift action is performed, where the target gear shift action includes one of a gear shift action when a drive mode of the vehicle remains unchanged and a gear shift action when the drive mode is switched.

The state information determination module 320 is configured to acquire state information of the vehicle when the first gear is in a fault state.

The target vehicle control strategy determination module 330 is configured to determine, based on the state information and a preset execution condition corresponding to the target gear shift action, a target vehicle control strategy.

The vehicle control module 340 is configured to control, based on the target vehicle control strategy, the vehicle.

In one embodiment, the drive mode includes an engine direct drive mode and a series hybrid mode; the target gear shift action includes a gear shift action of the vehicle in the engine direct drive mode and a gear shift action when the drive mode of the vehicle is switched from the engine direct drive mode to the series hybrid mode; the state information determination module 320 is further configured to: acquire a second gear currently used by the vehicle and a target vehicle speed; determine a brake pressure of a brake master cylinder in the vehicle when the vehicle is traveling at the target vehicle speed; determine a target calibration speed based on the second gear and the brake pressure; and determine the target vehicle speed and the target calibration speed as the state information.

In one embodiment, the target vehicle control strategy determination module 330 is further configured to: when the vehicle speed is greater than the target calibration speed, determine a strategy of maintaining the second gear and the engine direct drive mode as the target vehicle control strategy; and when the vehicle speed is less than or equal to the target calibration speed, determine a strategy of maintaining the second gear and controlling an engine in the vehicle to stop working as the target vehicle control strategy.

In one embodiment, the drive modes include a series hybrid mode and a pure electric drive mode, and the pure electric drive mode includes a pure electric four-wheel drive mode, an idle electric four-wheel drive mode, and an electric rear-wheel drive mode; the first gear is a neutral gear; the state information includes the target gear shift action; the state information includes the target gear shift action; the target vehicle control strategy determination module 330 is further configured to: when the target gear shift action is a gear shift action of the vehicle in the pure electric drive mode, determine a strategy of maintaining a second gear currently used by the vehicle and prohibiting activation of the series hybrid mode as the target vehicle control strategy, where the gear shift action of the vehicle in the pure electric drive mode includes at least a gear shift action when the drive mode of the vehicle is switched from the pure electric four-wheel drive mode to the electric rear-wheel drive mode, or a gear shift action when the pure electric four-wheel drive mode remains unchanged, or a gear shift action when the drive mode of the vehicle is switched from the idle electric four-wheel drive mode to the series hybrid mode.

In one embodiment, the drive modes include a pure electric four-wheel drive mode and an electric rear-wheel drive mode of a pure electric drive mode; the first gear is a power gear; the state information includes the target gear shift action; the target vehicle control strategy determination module 330 is further configured to: when the target gear shift action is a gear shift action of the vehicle in the pure electric drive mode, determine a strategy of maintaining the second gear currently used by the vehicle as the target vehicle control strategy; where the gear shift action in the pure electric drive mode includes at least a gear shift action of the vehicle in the pure electric four-wheel drive mode, or a gear shift action when the drive mode of the vehicle is switched from the electric rear-wheel drive mode to the pure electric four-wheel drive mode.

In one embodiment, the drive modes include a series hybrid mode and an idle electric four-wheel drive mode of a pure electric drive mode; the first gear is a power gear; the state information includes the target gear shift action; the target vehicle control strategy determination module 330 is further configured to: when the target gear shift action is a gear shift action when the drive mode of the vehicle is switched from the series hybrid mode to the idle electric four-wheel drive mode, determine a strategy of maintaining the second gear currently used by the vehicle and the series hybrid mode as the target vehicle control strategy.

In one embodiment, the drive modes include an engine direct drive mode and a pure electric four-wheel drive mode of a pure electric drive mode; the first gear is a power gear in the vehicle; the state information determination module 320 is further configured to: acquire a first working state of a clutch in the vehicle, and second working states of the other power gears; and determine the first working state and the second working states as the state information.

In one embodiment, the target vehicle control strategy determination module 330 is further configured to: when the first working state is in a fault state and the second working states are in fault states, determine a strategy of prohibiting the engine from starting, prohibiting activation of the pure electric four-wheel drive mode, and adjusting a vehicle gear to a neutral gear as the target vehicle control strategy; and when the first working state is in a normal state, and the second working states are in fault states, determine a strategy of prohibiting the engine direct drive mode, prohibiting the activation of the pure electric four-wheel drive mode, and adjusting the vehicle gear to the neutral gear as the target vehicle control strategy.

For the device embodiment, since it is basically similar to the method embodiment, the description is relatively simple, and the relevant parts may be referred to the description of the method embodiment.

FIG. 4 is a schematic structural diagram of a vehicle provided by an embodiment of the present application. As shown in FIG. 4, the vehicle 400 of the present embodiment includes: a processor 410, a memory 420, and a computer program 430 stored in the memory 420 and executable on the processor 410, such as a program of a vehicle control method. When the processor 410 executes the computer program 430, it implements the steps in each embodiment of the control method for the vehicle described above, such as S201 to S204 shown in FIG. 1. Alternatively, when the processor 410 executes the computer program 430, it implements the functions of each module in the embodiment corresponding to FIG. 3, such as the functions of modules 310 to 340 shown in FIG. 3. Specifically, the vehicle may be described as follows.

A vehicle, including a memory, a processor, and a computer program stored in the memory and executable on the processor, where the computer program is executed by the processor to implement the following steps: determining a first gear to be switched to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

In one embodiment, the drive mode includes an engine direct drive mode and a series hybrid mode; the target gear shift action includes a gear shift action of the vehicle in the engine direct drive mode and a gear shift action when the drive mode of the vehicle is switched from the engine direct drive mode to the series hybrid mode; the processor further implements the following when executing the computer program: acquiring a second gear currently used by the vehicle and a target vehicle speed; determining a brake pressure of a brake master cylinder in the vehicle when the vehicle is traveling at the target vehicle speed; determining a target calibration speed based on the second gear and the brake pressure; and determining the target vehicle speed and the target calibration speed as the state information.

In one embodiment, the processor further implements the following when executing the computer program: when the vehicle speed is greater than the target calibration speed, determining a strategy of maintaining the second gear and the engine direct drive mode as the target vehicle control strategy; and when the vehicle speed is less than or equal to the target calibration speed, determining a strategy of maintaining the second gear and controlling an engine in the vehicle to stop working as the target vehicle control strategy.

In one embodiment, the drive modes includes a series hybrid mode and a pure electric drive mode, and the pure electric drive mode includes a pure electric four-wheel drive mode, an idle electric four-wheel drive mode, and an electric rear-wheel drive mode; the first gear is a neutral gear; the state information includes the target gear shift action; the processor further implements the following when executing the computer program: when the target gear shift action is a gear shift action of the vehicle in the pure electric drive mode, determining a strategy of maintaining a second gear currently used by the vehicle and prohibiting activation of the series hybrid mode as the target vehicle control strategy, where the gear shift action of the vehicle in the pure electric drive mode includes at least a gear shift action when the drive mode of the vehicle is switched from the pure electric four-wheel drive mode to the electric rear-wheel drive mode, or a gear shift action when the pure electric four-wheel drive mode remains unchanged, or a gear shift action when the drive mode of the vehicle is switched from the idle electric four-wheel drive mode to the series hybrid mode.

In one embodiment, the drive modes include a pure electric four-wheel drive mode and an electric rear-wheel drive mode of a pure electric drive mode; the first gear is a power gear; the state information includes the target gear shift action; the processor further implements the following when executing the computer program: when the target gear shift action is a gear shift action of the vehicle in the pure electric drive mode, determining a strategy of maintaining the second gear currently used by the vehicle as the target vehicle control strategy; the gear shift action in the pure electric drive mode includes at least a gear shift action of the vehicle in the pure electric four-wheel drive mode, or a gear shift action when the drive mode of the vehicle is switched from the electric rear-wheel drive mode to the pure electric four-wheel drive mode.

In one embodiment, the drive modes include a series hybrid mode and an idle electric four-wheel drive mode of a pure electric drive mode; the first gear is a power gear; the state information includes the target gear shift action; the processor further implements the following when executing the computer program: when the target gear shift action is a gear shift action when the drive mode of the vehicle is switched from the series hybrid mode to the idle electric four-wheel drive mode, determining a strategy of maintaining the second gear currently used by the vehicle and the series hybrid mode as the target vehicle control strategy.

In one embodiment, the drive modes include an engine direct drive mode and a pure electric four-wheel drive mode of a pure electric drive mode; the first gear is a power gear in the vehicle; the processor further implements the following when executing the computer program: acquiring a first working state of a clutch in the vehicle, and second working states of the other power gears; and determining the first working state and the second working states as the state information.

In one embodiment, the processor further implements the following when executing the computer program: when the first working state is in a fault state and the second working states are in fault states, determining a strategy of prohibiting the engine from starting, prohibiting activation of the pure electric four-wheel drive mode, and adjusting a vehicle gear to a neutral gear as the target vehicle control strategy; and when the first working state is in a normal state, and the second working states are in fault states, determining a strategy of prohibiting the engine direct drive mode, prohibiting the activation of the pure electric four-wheel drive mode, and adjusting the vehicle gear to the neutral gear as the target vehicle control strategy.

Therein, the computer program 430 may be divided into one or more modules, and one or more modules are stored in the memory 420 and executed by the processor 410 to implement the control method for the vehicle provided by the embodiments of the present application. One or more modules may be a series of computer program instruction segments that can complete specific functions. The instruction segments are used to describe the execution process of the computer program 430 in the vehicle 400. For example, the computer program 430 may be executed to implement the control method for the vehicle provided by the embodiments of the present application. Specifically, it may be described as follows.

An embodiment of this application provides a computer-readable storage medium. The computer-readable storage medium stores a computer program. When the computer program is executed by the processor, it implements the following steps: determining a first gear to be switched to when a target gear shift action is performed, where the target gear shift action includes one of a gear shift action when a drive mode of the vehicle remains unchanged and a gear shift action when the drive mode is switched; acquiring state information of the vehicle when the first gear is in a fault state; determining, based on the state information and a preset execution condition corresponding to the target gear shift action, a target vehicle control strategy; and controlling, based on the target vehicle control strategy, the vehicle.

In one embodiment, the drive mode includes an engine direct drive mode and a series hybrid mode; the target gear shift action includes a gear shift action of the vehicle in the engine direct drive mode and a gear shift action when the drive mode of the vehicle is switched from the engine direct drive mode to the series hybrid mode; the processor further implements the following when executing the computer program: acquiring a second gear currently used by the vehicle and a target vehicle speed; determining a brake pressure of a brake master cylinder in the vehicle when the vehicle is traveling at the target vehicle speed; determining a target calibration speed based on the second gear and the brake pressure; and determining the target vehicle speed and the target calibration speed as the state information.

In one embodiment, when the computer program is executed by the processor, it further implements: when the vehicle speed is greater than the target calibration speed, determining a strategy of maintaining the second gear and the engine direct drive mode as the target vehicle control strategy; and when the vehicle speed is less than or equal to the target calibration speed, determining a strategy of maintaining the second gear and controlling an engine in the vehicle to stop working as the target vehicle control strategy.

In one embodiment, the drive modes include a series hybrid mode and a pure electric drive mode, and the pure electric drive mode includes a pure electric four-wheel drive mode, an idle electric four-wheel drive mode, and an electric rear-wheel drive mode; the first gear is a neutral gear; the state information includes the target gear shift action; when the computer program is executed by the processor, it further implements: when the target gear shift action is a gear shift action of the vehicle in the pure electric drive mode, determining a strategy of maintaining a second gear currently used by the vehicle and prohibiting activation of the series hybrid mode as the target vehicle control strategy, where the gear shift action of the vehicle in the pure electric drive mode includes at least a gear shift action when the drive mode of the vehicle is switched from the pure electric four-wheel drive mode to the electric rear-wheel drive mode, or a gear shift action when the pure electric four-wheel drive mode remains unchanged, or a gear shift action when the drive mode of the vehicle is switched from the idle electric four-wheel drive mode to the series hybrid mode.

In one embodiment, the drive modes include a pure electric four-wheel drive mode and an electric rear-wheel drive mode of a pure electric drive mode; the first gear is a power gear; the state information includes the target gear shift action; when the computer program is executed by the processor, it further implements: when the target gear shift action is a gear shift action of the vehicle in the pure electric drive mode, determining a strategy of maintaining the second gear currently used by the vehicle as the target vehicle control strategy; the gear shift action in the pure electric drive mode includes at least a gear shift action of the vehicle in the pure electric four-wheel drive mode, or a gear shift action when the drive mode of the vehicle is switched from the electric rear-wheel drive mode to the pure electric four-wheel drive mode.

In one embodiment, the drive modes include a series hybrid mode and an idle electric four-wheel drive mode of a pure electric drive mode; the first gear is a power gear; the state information includes the target gear shift action; when the computer program is executed by the processor, it further implements: when the target gear shift action is a gear shift action when the drive mode of the vehicle is switched from the series hybrid mode to the idle electric four-wheel drive mode, determining a strategy of maintaining the second gear currently used by the vehicle and the series hybrid mode as the target vehicle control strategy.

In one embodiment, the drive modes include an engine direct drive mode and a pure electric four-wheel drive mode of a pure electric drive mode; the first gear is a power gear in the vehicle; when the computer program is executed by the processor, it further implements: acquiring a first working state of a clutch in the vehicle, and second working states of the other power gears; and determining the first working state and the second working states as the state information.

In one embodiment, when the computer program is executed by the processor, it further implements: when the first working state is in a fault state and the second working states are in fault states, determining a strategy of prohibiting the engine from starting, prohibiting activation of the pure electric four-wheel drive mode, and adjusting a vehicle gear to a neutral gear as the target vehicle control strategy; and when the first working state is in a normal state, and the second working states are in fault states, determining a strategy of prohibiting the engine direct drive mode, prohibiting the activation of the pure electric four-wheel drive mode, and adjusting the vehicle gear to the neutral gear as the target vehicle control strategy.

Therein, the vehicle 400 may include, but is not limited to, the processor 410 and the memory 420. The processor 410 includes, but is not limited to, a central processing unit, a general-purpose processor, and a digital signal processor. The memory 420 includes, but is not limited to, a hard disk, a memory, a plug-in hard disk, a smart storage card, and a flash memory card of the vehicle 400.

The embodiments of the present application provide a computer program product. When the computer program product runs on a vehicle, it causes the vehicle to execute the control method for the vehicle in the various embodiments described above.

The above embodiments are only used to illustrate the technical solutions of the present application and are not intended to limit it. Although the application has been described in detail with reference to the foregoing embodiments, those skilled in the art should understand that they can still modify the technical solutions described in the foregoing embodiments or equivalently replace some of the technical features; and these modifications or replacements do not cause the essence of the corresponding technical solutions to deviate from the spirit and scope of the technical solutions of the embodiments of the present application, and should be included within the protection scope of the present application.

## Claims

1. A control method for a vehicle, comprising:
determining a first gear to be shifted to when a target gear shift action is performed, wherein the target gear shift action comprises one of a gear shift action when a drive mode of the vehicle remains unchanged and a gear shift action when the drive mode is switched;
acquiring state information of the vehicle when the first gear is in a fault state;
determining, based on the state information and a preset execution condition corresponding to the target gear shift action, a target vehicle control strategy; and
controlling, based on the target vehicle control strategy, the vehicle.

2. The control method according to claim 1, wherein the drive mode comprises an engine direct drive mode and a series hybrid mode; the target gear shift action comprises a gear shift action of the vehicle in the engine direct drive mode and a gear shift action when the drive mode of the vehicle is switched from the engine direct drive mode to the series hybrid mode; and the acquiring the state information of the vehicle comprises:
acquiring a second gear currently used by the vehicle and a target vehicle speed;
determining a brake pressure of a brake master cylinder in the vehicle when the vehicle is driving at the target vehicle speed;
determining a target calibration speed based on the second gear and the brake pressure; and
determining the target vehicle speed and the target calibration speed as the state information.

3. The control method according to claim 2, wherein the determining, based on the state information and the preset execution condition corresponding to the target gear shift action, the target vehicle control strategy comprises:
when the vehicle speed is greater than the target calibration speed, determining a strategy of maintaining the second gear and the engine direct drive mode as the target vehicle control strategy;
when the vehicle speed is less than or equal to the target calibration speed, determining a strategy of maintaining the second gear and controlling an engine in the vehicle to stop working as the target vehicle control strategy.

4. The control method according to claim 1, wherein the drive mode comprises a series hybrid mode and a pure electric drive mode, and the pure electric drive mode comprises a pure electric four-wheel drive mode, an idle electric four-wheel drive mode, and an electric rear-wheel drive mode; the first gear is a neutral gear; the state information comprises the target gear shift action; and the determining, based on the state information and the preset execution condition corresponding to the target gear shift action, the target vehicle control strategy comprises:
when the target gear shift action is a gear shift action of the vehicle in the pure electric drive mode, determining a strategy of maintaining a second gear currently used by the vehicle and prohibiting activation of the series hybrid mode as the target vehicle control strategy, wherein the gear shift action of the vehicle in the pure electric drive mode comprises at least a gear shift action when the drive mode of the vehicle is switched from the pure electric four-wheel drive mode to the electric rear-wheel drive mode, or a gear shift action when the pure electric four-wheel drive mode remains unchanged, or a gear shift action when the drive mode of the vehicle is switched from the idle electric four-wheel drive mode to the series hybrid mode.

5. The control method according to claim 1, wherein the drive mode comprises a pure electric four-wheel drive mode and an electric rear-wheel drive mode of a pure electric drive mode; the first gear is a power gear; the state information comprises the target gear shift action; and the determining, based on the state information and the preset execution condition corresponding to the target gear shift action, the target vehicle control strategy comprises:
when the target gear shift action is a gear shift action of the vehicle in the pure electric drive mode, determining a strategy of maintaining the second gear currently used by the vehicle as the target vehicle control strategy; wherein the gear shift action in the pure electric drive mode comprises at least a gear shift action of the vehicle in the pure electric four-wheel drive mode, or a gear shift action when the drive mode of the vehicle is switched from the electric rear-wheel drive mode to the pure electric four-wheel drive mode.

6. The control method according to claim 1, wherein the drive mode comprises a series hybrid mode and an idle electric four-wheel drive mode of a pure electric drive mode; the first gear is a power gear; the state information comprises the target gear shift action; and the determining, based on the state information and the preset execution condition corresponding to the target gear shift action, the target vehicle control strategy comprises:
when the target gear shift action is a gear shift action when the drive mode of the vehicle is switched from the series hybrid mode to the idle electric four-wheel drive mode, determining a strategy of maintaining the second gear currently used by the vehicle and the series hybrid mode as the target vehicle control strategy.

7. The control method according to claim 1, wherein the drive mode comprises an engine direct drive mode and a pure electric four-wheel drive mode of a pure electric drive mode; the first gear is a power gear in the vehicle; the acquiring the state information of the vehicle comprises:
acquiring a first working state of a clutch in the vehicle, and second working states of the other power gears; and
determining the first working state and the second working states as the state information.

8. The control method according to claim 7, wherein the determining, based on the state information and the preset execution condition corresponding to the target gear shift action, the target vehicle control strategy comprises:
when the first working state is in a fault state and all of the second working states are in the fault states, determining a strategy of prohibiting the engine from starting, prohibiting activation of the pure electric four-wheel drive mode, and adjusting a gear of the vehicle to a neutral gear as the target vehicle control strategy; and
when the first working state is in a normal state and all of the second working states are in the fault states, determining a strategy of prohibiting the engine direct drive mode, prohibiting the activation of the pure electric four-wheel drive mode, and adjusting the gear of the vehicle to the neutral gear as the target vehicle control strategy.

9. A vehicle control device, comprising:
a first gear determination module, configured to determine a first gear to be shifted to when a target gear shift action is performed, wherein the target gear shift action comprises one of a gear shift action when a drive mode of the vehicle remains unchanged and a gear shift action when the drive mode is switched;
a state information determination module, configured to acquire state information of the vehicle when the first gear is in a fault state;
a target vehicle control strategy determination module, configured to determine, based on the state information and a preset execution condition corresponding to the target gear shift action, a target vehicle control strategy; and
a vehicle control module, configured to control, based on the target vehicle control strategy, the vehicle.

10. A vehicle, comprising a memory, a processor, and a computer program stored in the memory and executable on the processor, wherein the computer program is executed by the processor to implement the following steps:
determining a first gear to be shifted to when a target gear shift action is performed, wherein the target gear shift action comprises one of a gear shift action when a drive mode of the vehicle remains unchanged and a gear shift action when the drive mode is switched;
acquiring state information of the vehicle when the first gear is in a fault state;
determining, based on the state information and a preset execution condition corresponding to the target gear shift action, a target vehicle control strategy; and
controlling, based on the target vehicle control strategy, the vehicle.

11. A computer-readable storage medium, wherein a computer program is stored in the computer-readable storage medium and is executed by a processor to implement the following steps:
determining a first gear to be shifted to when a target gear shift action is performed, wherein the target gear shift action comprises one of a gear shift action when a drive mode of the vehicle remains unchanged and a gear shift action when the drive mode is switched;
acquiring state information of the vehicle when the first gear is in a fault state;
determining, based on the state information and a preset execution condition corresponding to the target gear shift action, a target vehicle control strategy; and
controlling, based on the target vehicle control strategy, the vehicle.
